Europäisches Patentamt

European Patent Office

Office européen des brevets

(19)

(11) **EP 1 334 320 B1**

(12) **FASCICULE DE BREVET EUROPEEN**

(45) Date de publication et mention
de la délivrance du brevet:
**08.06.2005 Bulletin 2005/23**

(21) Numéro de dépôt: **01993800.0**

(22) Date de dépôt: **09.11.2001**

(51) Int Cl.⁷: **F25B 35/04**, F25B 17/08,
B01D 53/04

(86) Numéro de dépôt international:
**PCT/FR2001/003479**

(87) Numéro de publication internationale:
**WO 2002/039035 (16.05.2002 Gazette 2002/20)**

(54) **DISPOSITIF DE REFRIGERATION PAR ADSORPTION**

ADSORPTIONSKÜHLVORRICHTUNG

ADSORPTION REFRIGERATING DEVICE

(84) Etats contractants désignés:
**AT BE CH CY DE DK ES FI FR GB GR IE IT LI LU
MC NL PT SE TR**

(30) Priorité: **13.11.2000 FR 0014559**

(43) Date de publication de la demande:
**13.08.2003 Bulletin 2003/33**

(73) Titulaire: **Thermagen S.A.
91198 Gif-sur-Yvette (FR)**

(72) Inventeur: **JEUCH, Pierre
F-91190 Saint-Aubin (FR)**

(74) Mandataire: **Vieillefosse, Jean-Claude et al
Cabinet Hirsch
58, avenue Marceau
75008 Paris (FR)**

(56) Documents cités:
**DE-U- 9 404 126        FR-A- 948 292
FR-A- 1 029 877        FR-A- 2 679 633
FR-A- 2 811 412        US-A- 4 581 049
US-A- 4 928 495**

**Description**

La présente invention concerne un dispositif de réfrigération par évaporation et adsorption, dont le principe consiste à évaporer un liquide sous l'effet d'une dépression entretenue par adsorption des vapeurs dudit liquide. C'est l'évaporation de ce liquide réfrigérant contenu dans un évaporateur (une chambre, une cavité ou autre) qui provoque un refroidissement dans l'entourage de l'évaporateur. Une autre chambre, contenant des adsorbants est généralement reliée à l'évaporateur.

Le principe de la réfrigération par évaporation d'un liquide réfrigérant et adsorption de la vapeur de ce liquide a fait l'objet de nombreux développements, tant pour des systèmes cycliques (avec régénération des adsorbants par chauffage) que pour des systèmes à usage unique.

Dans tous ces dispositifs, l'adsorption s'accompagne d'une dissipation de chaleur dans les adsorbants conduisant à une élévation de température que l'on cherche à limiter en évacuant une partie de cette chaleur.

Les dispositifs cycliques comportent en général des adsorbants liés à des échangeurs thermiques qui permettent d'une part d'évacuer la chaleur dissipée par les adsorbants lors de la réaction d'adsorption des vapeurs du liquide réfrigérant, et d'autre part de chauffer ces adsorbants pour leur régénération.

Dans le cas de dispositifs à usage unique, le brevet US 4 759 191 propose de limiter l'élévation de la température en ajoutant aux adsorbants différents matériaux, en particulier des matériaux présentant un changement de phase solide-liquide entre 30°C et 70°C. Pour obtenir un effet significatif il faut cependant une quantité importante de matériaux à changement de phase solide-liquide (environ deux fois plus que d'adsorbants). Ce brevet US 4 759 191 mentionne également la possibilité d'utiliser un matériau de changement de phase liquide-gaz ainsi que des températures d'adsorbants allant jusqu'à 100°C voire 110°C. Cependant les contraintes de mise en oeuvre d'un tel dispositif ne sont pas analysées.

Le but de la présente invention est de pallier les inconvénients de l'art antérieur.

La façon la plus efficace de limiter l'élévation de la température de l'adsorbant est d'évacuer les calories par une évaporation d'eau, car la chaleur latente de l'eau est très élevée (45KJ par mole, soit 18 g d'eau). Néanmoins, pour assurer une évaporation rapide, il est nécessaire de porter l'eau à ébullition, ce qui peut présenter un risque de brûlure potentiel.

A cet effet, la présente invention propose d'associer à l'adsorbant des moyens pour faire baisser la température de la vapeur relâchée.

Selon l'invention, un échangeur de chaleur contenant un liquide de refroidissement (préférentiellement de l'eau liquide) est disposé en contact thermique avec l'adsorbant. Cet échangeur de chaleur comporte au moins une ouverture sur l'atmosphère extérieure constituée d'un ou de plusieurs petits orifices qui limitent le débit de la vapeur d'eau pouvant s'échapper. Ce ou ces orifices permettent en outre de provoquer une détente adiabatique de la vapeur d'eau sous pression de manière à abaisser sa température lorsqu'elle s'échappe vers l'extérieur.

L'invention se rapporte plus particulièrement à un dispositif de réfrigération par adsorption comportant un évaporateur contenant un liquide réfrigérant qui s'évapore sous l'effet d'une dépression et un adsorbant apte à fixer les vapeurs du liquide réfrigérant, caractérisé en ce que l'adsorbant est en contact avec un échangeur de chaleur contenant un liquide de refroidissement qui s'évapore lors de l'échauffement de l'adsorbant, ledit échangeur de chaleur comportant au moins une ouverture sur l'atmosphère extérieure constituée d'au moins un orifice qui limite le débit de la vapeur du liquide de refroidissement.

Selon une caractéristique, la vapeur du liquide de refroidissement subit une détente adiabatique à travers le ou lesdits orifices de manière à abaisser sa température lorsqu'elle s'échappe vers l'extérieur.

Selon une caractéristique, l'abaissement de la température de la vapeur est supérieur ou égal à 35°C.

Selon un mode de réalisation préférentiel, le liquide de refroidissement comporte de l'eau.

Selon une autre caractéristique, l'adsorbant est une zéolithe.

Selon un mode de réalisation, le liquide réfrigérant est de l'eau.

Selon un autre mode de réalisation, le liquide réfrigérant est un alcool.

Selon un mode de réalisation, le liquide de refroidissement comporte un additif aromatique dégageant une sensation de fraîcheur.

Les particularités et avantages de l'invention apparaîtront clairement à la lecture de la description qui suit, donnée à titre d'exemple illustratif et non limitatif, et faite en référence aux figures annexées dans lesquelles :

- La figure 1 est un schéma du dispositif selon l'invention dans une application à usage unique.
- La figure 2 est une vue schématique en coupe longitudinale d'une portion A du dispositif selon l'invention de la figure 1.

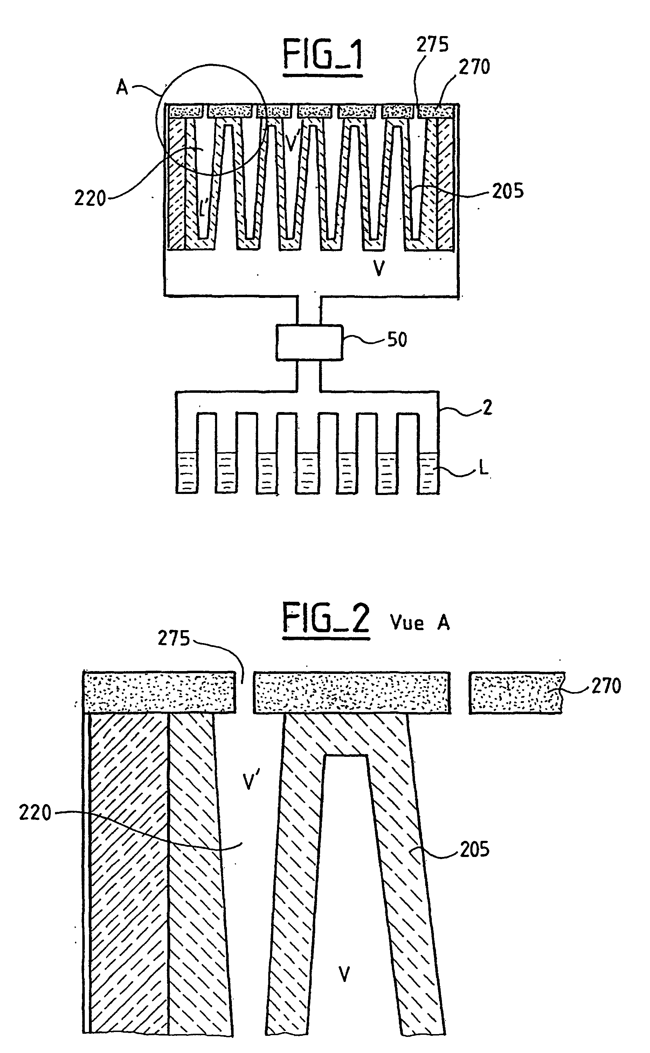

Le dispositif selon l'invention est destiné à être associé au moins à un évaporateur 2 contenant un liquide réfrigérant L apte à s'évaporer sous l'effet d'une dépression et dont les vapeurs V sont adsorbées par un adsorbant 205. Cette association est décrite en référence à la figure 1.

Un bloc d'adsorbants 205 est relié à un évaporateur 2 constitué d'une cavité sous vide d'air contenant un liquide réfrigérant L. Un dispositif de mise en communication 50, constitué d'un moyen de désoperculage ou d'une valve par exemple, permet de déclencher puis de maintenir l'adsorption des vapeurs V du liquide réfrigérant L.

Le liquide réfrigérant L est préférentiellement de l'eau mais il peut aussi être un alcool (méthanol, éthanol).

L'adsorbant 205 est préférentiellement une zéolithe. Par exemple, une zéolithe 13X ou zéolithe 4A en poudre fine (grains de quelques microns à quelques dizaines de microns) mélangée à un liant (une argile, par exemple kaolinite) et à de l'eau pour donner une pâte épaisse. Cette pâte est ensuite mise en forme, séchée et cuite sous vide à environ 350°C pour éliminer toute l'eau liée à la zéolithe. L'adsorbant est alors conservé sous vide.

L'adsorption des vapeurs V du liquide réfrigérant L provoque l'échauffement de l'adsorbant 205, ce qui limite son efficacité. La façon la plus efficace d'évacuer les calories dégagées par l'adsorbant 205 est l'évaporation d'eau. Néanmoins, pour assurer une évaporation rapide il faut porter l'eau à ébullition ce qui peut présenter un risque de brûlure potentiel.

La présente invention propose des moyens pour faire baisser la température de la vapeur relâchée.

Selon l'invention, un échangeur de chaleur 220 contenant un liquide de refroidissement L' est disposé en contact thermique avec l'adsorbant 205. Cet échangeur de chaleur 220 comporte au moins une ouverture 275 sur l'atmosphère extérieure constituée d'un ou de plusieurs petits orifices qui limitent le débit de la vapeur V' pouvant s'échapper. Ce ou ces orifices permettent en outre de provoquer une détente adiabatique de la vapeur V' sous pression de manière à abaisser sa température lorsqu'elle s'échappe vers l'extérieur.

Selon un mode de réalisation possible, l'ensemble constitué de l'adsorbant 205 et de l'échangeur de chaleur 220 est fermé par un couvercle 270 (en métal comme de l'aluminium par exemple). Ce couvercle 270 peut présenter un ou plusieurs orifices 275 dont le diamètre est limité afin de permettre une détente adiabatique de la vapeur V' du liquide de refroidissement L'.

Selon un mode de réalisation préférentiel, le liquide de refroidissement L' comporte de l'eau.

Selon un mode de mise en oeuvre, il est possible de prévoir un additif au liquide de refroidissement L' qui ajoute un arôme artificiel aux vapeurs chaudes V' dégagées vers l'extérieur. Cet arôme artificiel, à base d'eucalyptus ou de pastèque par exemple, produit avantageusement une sensation de fraîcheur.

Lors du fonctionnement du dispositif, la chaleur dégagée par l'adsorbant 205 provoque l'évaporation du liquide de refroidissement L' et l'augmentation de la pression de vapeur V' à l'intérieur de l'échangeur 220. Lorsque la vapeur V' sous pression s'échappe à travers le ou les orifices 275 de diamètre restreint, elle subit une détente adiabatique qui abaisse sa température.

L'abaissement de la température de la vapeur V' s'échappant vers l'extérieur est d'autant plus important que le débit de vapeur V' est élevé car alors la pression dans l'échangeur 220 est élevée et la détente importante.

Le tableau numérique ci dessous permet d'illustrer l'abaissement de la température de la vapeur V' rejetée dans l'atmosphère extérieure lors du fonctionnement du dispositif.

Ainsi, par exemple, pour une surpression de 1 bar, la température de la vapeur V' dans l'échangeur 220 s'élève à 120°C, mais après détente à travers le ou les orifices 275, la température de la vapeur rejetée n'est plus qu'à environ 55°C.

Cette surpression peut être atteinte, par exemple, par un débit de vapeur V' de 0.1 g/sec à travers un orifice de 0.4 mm$^2$ de section.

Le refroidissement par détente adiabatique est régi par la loi physique suivante:

$$\frac{T_2}{T_1} = \left(\frac{P_2}{P_1}\right)^{\frac{\gamma-1}{\gamma}}$$

où les couples ($T_1$, $P_1$) et ($T_2$, $P_2$) sont les températures et pressions avant et après détente.
et où $\gamma$ est la constante isentropique,
$\gamma$=1.35 pour H2O à 100°C, $(\gamma-1)/\gamma$= 0.259

| Température dans l'échangeur (°C) $T_1$ | Pression $P_1$ dans l'échangeur (bar) | Température après détente (°C) $T_2$ |
|---|---|---|
| 100 | 1 | 100 |
| 105 | 1.2 | 87 |
| 110 | 1.4 | 78 |

(suite)

| Température dans l'échangeur (°C) $T_1$ | Pression $P_1$ dans l'échangeur (bar) | Température après détente (°C) $T_2$ |
|---|---|---|
| 115 | 1.7 | 65 |
| 120 | 2 | 55 |
| 125 | 2.3 | 48 |

Le tableau suivant illustre la puissance de refroidissement obtenue en fonction de la surpression provoquée.

La pression de vapeur en fonction de la température est tirée du Handbook of Chemistery and Physics, 80th edition.

Les débits du tableau correspondent à un orifice de diamètre 1 mm (0.8 mm2) (code Flowmaster). Le débit de vapeur V' est proportionnel à la surface de l'orifice, et la puissance de refroidissement est proportionnelle au débit (chaleur latente de vaporisation de l'eau).

| T (°C) | P (bar) | Débit g/sec | P (Watt) |
|---|---|---|---|
| 200 | 15.53 | 1.62 | 4005 |
| 190 | 12.54 | 1.33 | 3325 |
| 180 | 10 | 1.05 | 2625 |
| 170 | 7.91 | 0.81 | 2025 |
| 160 | 6.17 | 0.63 | 1575 |
| 150 | 4.75 | 0.48 | 1200 |
| 140 | 3.61 | 0.36 | 900 |
| 130 | 2.70 | 0.27 | 675 |
| 120 | 1.98 | 0.20 | 500 |
| 115 | 1.69 | 0.17 | 425 |
| 112 | 1.53 | 0.15 | 375 |
| 110 | 1.43 | 0.134 | 335 |
| 108 | 1.33 | 0.12 | 300 |
| 106 | 1.24 | 0.10 | 250 |
| 104 | 1.16 | 0.082 | 205 |
| 102 | 1.08 | 0.060 | 150 |
| 100 | 1 | | |

## Revendications

1. Dispositif de réfrigération par adsorption comportant un évaporateur (2) contenant un liquide réfrigérant (L) qui s'évapore sous l'effet d'une dépression et un adsorbant (205) apte à fixer les vapeurs (V) du liquide réfrigérant (L), **caractérisé en ce que** l'adsorbant (205) est en contact avec un échangeur de chaleur (220) contenant un liquide de refroidissement (L') qui s'évapore lors de l'échauffement de l'adsorbant (205), ledit échangeur de chaleur (220) comportant au moins une ouverture (275) sur l'atmosphère extérieure constituée d'au moins un orifice qui limite le débit de la vapeur (V') du liquide de refroidissement (L')

2. Dispositif de réfrigération selon la revendication 1, **caractérisé en ce que** la vapeur (V') du liquide de refroidissement (L') subit une détente adiabatique à travers le ou lesdits orifices (275) de manière à abaisser sa température lorsqu'elle s'échappe vers l'extérieur.

3. Dispositif de réfrigération selon la revendication 2, **caractérisé en ce que** l'abaissement de la température de la vapeur (V') est supérieur ou égal à 35°C.

4. Dispositif de réfrigération selon l'une quelconque des revendications précédentes, **caractérisé en ce que** le liquide de refroidissement (L') comporte de l'eau.

5. Dispositif selon l'une quelconque des revendications précédentes, **caractérisé en ce que** l'adsorbant (205) est une zéolithe.

6. Dispositif selon l'une quelconque des revendications 1 à 5, **caractérisé en ce que** le liquide réfrigérant (L) est de l'eau.

7. Dispositif selon l'une quelconque des revendications 1 à 5, **caractérisé en ce que** le liquide réfrigérant (L) est un alcool.

8. Dispositif de réfrigération selon l'une quelconque des revendications précédentes, **caractérisé en ce que** le liquide de refroidissement (L') comporte un additif aromatique dégageant une sensation de fraîcheur.


**Patentansprüche**

1. Adsorptionskühlvorrichtung, die einen Verdampfer (2), der eine Kühlmittelflüssigkeit (L) enthält, die unter der Wirkung eines Unterdrucks verdampft, und ein Adsorptionsmittel (205) aufweist, das geeignet ist, die Dämpfe (V) der Kühlmittelflüssigkeit (L) festzuhalten, **dadurch gekennzeichnet, daß** das Adsorptionsmittel (205) in Kontakt mit einem Wärmeaustauscher (220) ist, der eine Kühlflüssigkeit (L') enthält, die beim Erhitzen des Adsorptionsmittel (205) verdampft, wobei der Wärmeaustauscher (220) mindestens einen Ausgang (275) zur Außenatmosphäre aufweist, der aus mindestens einer Öffnung besteht, die die Abgaberate des Dampfs (V') der Kühlflüssigkeit (L') begrenzt.

2. Kühlvorrichtung nach Anspruch 1, **dadurch gekennzeichnet, daß** sich der Dampf (V') der Kühlflüssigkeit (L') über die Öffnung(en) (275) hinweg adiabatisch ausdehnt, so daß sich seine Temperatur erniedrigt, wenn er nach außen entweicht.

3. Kühlvorrichtung nach Anspruch 2, **dadurch gekennzeichnet, daß** die Temperaturerniedrigung des Dampfs (V') gleich oder größer als 35°C ist.

4. Kühlvorrichtung nach einem der vorstehenden Ansprüche, **dadurch gekennzeichnet, daß** die Kühlflüssigkeit (L') Wasser aufweist.

5. Vorrichtung nach einem der vorstehenden Ansprüche, **dadurch gekennzeichnet, daß** das Adsorptionsmittel (205) Zeolith ist.

6. Vorrichtung nach einem der Ansprüche 1 bis 5, **dadurch gekennzeichnet, daß** die Kühlmittelflüssigkeit (L) Wasser ist.

7. Vorrichtung nach einem der Ansprüche 1 bis 5, **dadurch gekennzeichnet, daß** die Kühlmittelflüssigkeit (L) ein Alkohol ist.

8. Vorrichtung nach einem der vorstehenden Ansprüche, daß die Kühlflüssigkeit (L') einen Duftzusatz aufweist, der ein Gefühl von Frische verbreitet.


**Claims**

1. An adsorption refrigeration device comprising an evaporator (2) containing a refrigerant liquid (L) that evaporates under the effect of a depression and an adsorbent (205) capable of fixing the vapors (V) of the refrigerant liquid (L), **characterized in that** the adsorbent (205) is in contact with a heat exchanger (220) containing a cooling liquid (L') that evaporates when the adsorbent (205) is heated, said heat exchanger (220) comprising at least one aperture (275) to the outside atmosphere constituted by at least one hole that limits the flow rate of the vapor (V') of the cooling liquid (L').

**2.** A cooling device according to claim 1, **characterized in that** the vapor (V') of the cooling liquid (L') undergoes adiabatic pressure reduction through said aperture or apertures (275) so as to lower the temperature when it escapes outwards.

**3.** A cooling device according to claim 2, **characterized in that** the lowering of the temperature of the vapor (V') is greater than or equal to 35°C.

**4.** A cooling device according to any of the above claims, **characterized in that** the cooling liquid (L') comprises water.

**5.** A device according to any of the above claims, **characterized in that** the adsorbent (205) is a zeolite.

**6.** A device according to any of the claims 1 to 5, **characterized in that** the refrigerant liquid (L) is water.

**7.** A device according to any of the claims 1 to 5, **characterized in that** the refrigerant liquid (L) is an alcohol.

**8.** A cooling device according to any one of the preceding claims, **characterized in that** the cooling liquid (L') comprises an aromatic additive releasing a sensation of freshness.

FIG_1

FIG_2  Vue A